Europäisches Patentamt

European Patent Office

Office européen des brevets

(19)

(11) **EP 1 069 675 A1**

(12) **EUROPEAN PATENT APPLICATION**

(43) Date of publication:
**17.01.2001 Bulletin 2001/03**

(51) Int Cl.[7]: **H02M 3/337**, H02M 3/28

(21) Application number: **99830448.9**

(22) Date of filing: **15.07.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **MAGNETEK S.p.A.**
**52028 Terranuova Bracciolini (AR) (IT)**

(72) Inventor: **Kim, Minho**
**52031 Anghiari, Arezzo (IT)**

(74) Representative:
**Mannucci, Gianfranco, Dott.-Ing.**
**Ufficio Tecnico Ing. A. Mannucci**
**Via della Scala 4**
**50123 Firenze (IT)**

(54) **Rectifier**

(57)    The rectifier comprises:

-    a transformer (T1) with a primary winding (13), to whose ends is applied a voltage which is cyclically variable over time, and a secondary winding (15);
-    a first and a second rectifying diode (D5, D6), having corresponding first and second electrodes, the first electrode of each of said diodes being connected to a first output terminal (17) of the rectifier;
-    a first and a second reactive component (L1, L2) interposed between the corresponding second electrode of each of said diodes and a second output terminal (19) of the rectifier, said second electrodes of the two diodes being additionally connected to the two ends of the secondary winding (15).

A first and a second delay element (S1, S2), which maintain a flow of current through the secondary winding (15) during a freewheeling passive phase of the rectifier, are connected in series with each of the diodes (D5, D6) respectively.

Fig. 1

EP 1 069 675 A1

## Description

The present invention relates to a rectifier, particularly a rectifier which can be used as a component of a DC/DC power converter. The invention also relates to a DC/DC power converter comprising a rectifier.

More particularly, the present invention relates to a rectifier of the type comprising a transformer with a primary winding and a secondary winding; a first and a second electronic rectifying component, typically diodes, connected to a corresponding first electrode at one of the output terminals of the rectifier; and a first and a second reactive component, interposed between the corresponding second electrodes of said electronic rectifying components and a second output terminal of the rectifier, and in which the second electrodes of said rectifying components are connected to the two ends of the secondary winding.

With respect to the present description and the attached claims, it is to be understood that the connection of the electrodes of the diodes to the output terminals and to the ends of the secondary winding of the transformer do not necessarily have to be direct connections, since further elements in series with the diodes may be interposed between the electrode and the terminals or the ends of the secondary winding, as will be made clear in the following description.

A rectifier of the type mentioned above, inserted in a DC/DC converter, is described in US-A-4,899,271. In this converter of a known type, each rectifying diode is connected directly to a corresponding end of the secondary winding of the transformer. The converter described in the aforementioned patent has the advantage, with respect to other center-tapped converters, of a better use of the transformer, without the necessity of using four rectifying components, with the consequent high power loss which normally occurs in these elements.

The converter described in the United States patent mentioned above has the disadvantage of high switching losses in the primary, since the switching of the controlled switches does not take place when the voltage passes through zero.

US-A-5,132,889 describes a DC/DC converter in which the losses in the switches are reduced because the switching takes place when the voltage passes through zero. However, this type of converter has an output circuit configuration with a center-tapped secondary winding, with the disadvantages that this entails in terms of losses in the transformer.

The object of the present invention is to provide a new type of rectifier, which is particularly useful if applied to a DC/DC converter, and which, in this application, enables the disadvantages of the aforementioned converters to be overcome. More particularly, the object of the present invention is to provide a device which enables the switching losses of the switches to be reduced, which avoids the necessity of using a transformer with a center-tapped configuration of the secondary, and which also eliminates the necessity of using a four-diode configuration of the rectifier in the output circuit.

These and other objects and advantages, which will be clear to a person skilled in the art from the following text, are obtained with a rectifier of the type mentioned above, in which a first and a second delay element are connected in series with the first and second rectifying component respectively. The delay elements, which may, for example, consist of inductances and in particular of saturable inductances, maintain a flow of current through the secondary winding, and consequently through the primary winding of the transformer, during the "freewheeling" phase. This enables the switches located in the primary winding circuit of the converter to be switched at zero voltage.

When the rectifier is inserted in a converter, the switching circuit of the converter may have a full-bridge or half-bridge configuration, since the aforementioned advantages are obtained in both configurations.

The rectifying components typically consist of diodes, but there is no reason why corresponding active components, for example MOSFETs or other controlled switches, should not be used in place of the diodes.

Further advantageous characteristics and embodiments of the converter according to the invention are indicated in the attached claims.

The invention will be more clearly understood from the description and the attached drawing, which shows practical and non-restrictive embodiments of the invention. More particularly, in the drawing:

Figs. 1 and 2 show two circuit diagrams of a converter with a full-bridge switch configuration;

Fig. 3 shows the equivalent circuit of the transformer of the converter;

Fig. 4 shows the circuit in the active phase in which the energy is transferred from the primary to the secondary;

Fig. 5 shows the circuit in the phase of transition from the active phase to the passive or "free-wheeling" phase;

Fig. 6 shows the equivalent circuit corresponding to the situation in Fig. 5;

Fig. 7 shows a V-ZI diagram relating to the transition phase in Fig. 5;

Fig. 8 shows the circuit in the passive phase, known as the "free-wheeling" phase;

Fig. 9 shows the circuit in the phase of transition from the passive, in other words the "free-wheeling" phase, to the subsequent active phase;

Fig. 10 shows the equivalent circuit in the transition phase in Fig. 9;

Fig. 11 shows the V-ZI diagram for the transition phase in Fig. 9;

Figs. 12a-12d show the waveforms of various magnitudes in the circuit during the various phases of operation; and

Fig. 13 shows a different embodiment of the circuit, in a half-bridge configuration.

In the following description, the rectifier is described as a component of a DC/DC converter consisting of a switching circuit and a rectifier circuit proper. The present invention, although particularly advantageous if used in a DC/DC converter, should not be understood in a restrictive sense. The rectifier according to the invention may also be used, for example, in an AC/DC converter. In this case, an alternating voltage is applied to the terminals of the primary winding of the transformer.

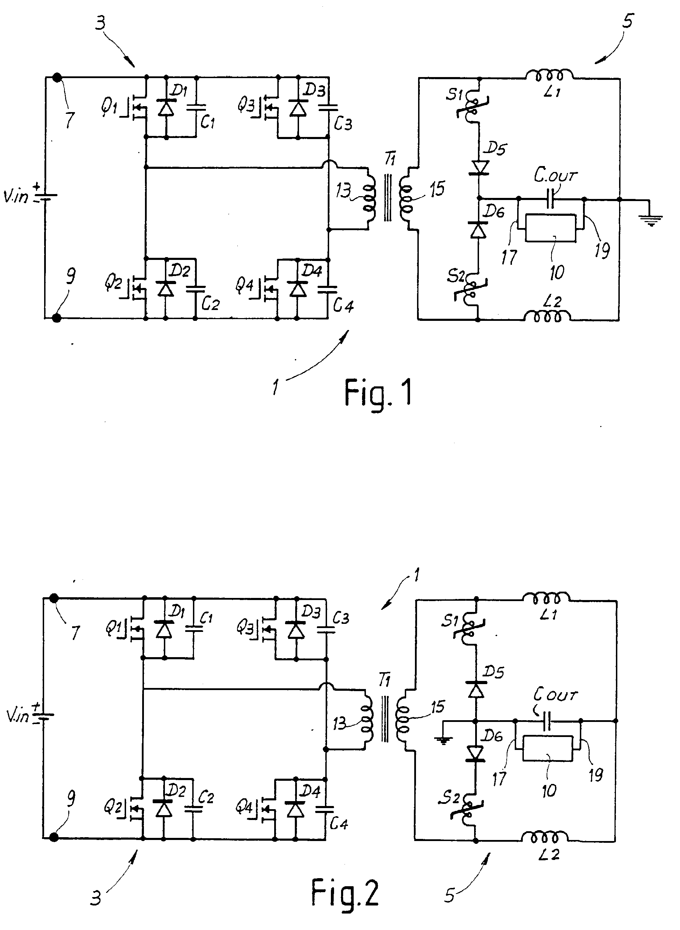

Figs. 1 and 2 show two alternative configurations of the converter, comprising the rectifier according to the invention in a first embodiment. The two configurations differ in the different orientation of the diodes, but are otherwise identical, and the following description can be applied to both of the configurations, where identical numbers indicate identical or corresponding parts.

The converter, indicated in a general way by the number 1, has a switching circuit 3 and a rectifier and output circuit 5. The switching circuit 3 has two input terminals 7, 9 between which a continuous voltage, shown schematically as the voltage source $V_{in}$, is applied. The voltage $V_{in}$ is applied to a full bridge comprising four controlled switches Q1, Q2, Q3, Q4, whose parasitic diodes D1, D2, D3, D4 and parasitic capacitors C1, C2, C3, C4 are also shown. The bridge Q1-Q4 is connected, on one diagonal, to the input terminals 7, 9, and, on the other diagonal, to a primary winding 13 of a transformer T1, whose secondary winding, indicated by 15, is inserted in the rectifier and output circuit 5.

The rectifier and output circuit 5 comprises two rectifying diodes D5 and D6 connected by corresponding first electrodes to a first output terminal 17 of the circuit. Each of said two rectifying diodes D5, D6 is also connected, by the other electrode, to a corresponding saturable inductance S1, S2, each of which is connected between the corresponding diode and one of the ends of the secondary winding 15 of the transformer T1.

Each saturable inductance S1, S2 (or other equivalent delay element) may be located between the diode and the output terminal 17, instead of between the corresponding diode D5, D6 and the corresponding end of the secondary winding 15. In other words, in one or the other of the pairs D5, S1; D6, S2 - or in both - the positions of the diode and the inductance may be interchanged.

The ends of the secondary winding 15 and the corresponding electrodes of the diodes D5, D6 connected to them are also connected to the second output terminal 19 of the converter by means of two reactive components represented by two output inductances L1 and L2. $C_{out}$ indicates a capacitor with high capacitance located between the output terminals 17, 19, between which a generic load 10 is applied.

A control circuit, which is known per se and is not illustrated, causes the controlled switches Q1-Q4 to open and close in the sequence which will now be described.

In the following description, it is assumed that the parasitic capacitances C1-C4 all have the same value, which will be indicated by C, and that the reactive components L1, L2 have the same inductance, equal to $L_0$.

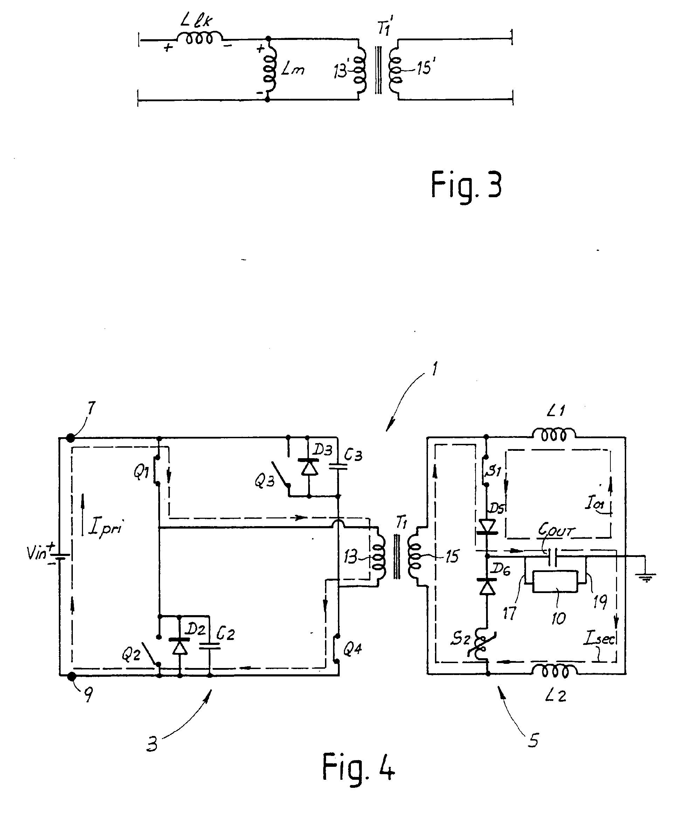

Fig. 3 shows the equivalent circuit of the transformer T1, and indicates the parameters which will be used in the following text to illustrate the operation of the circuit in Fig. 1. In the equivalent circuit in Fig. 3, the primary and secondary windings 13', 15' of a theoretical transformer T1' equivalent to the transformer T1 are indicated, while $L_m$ indicates the magnetizing inductance of the transformer and $L_{lk}$ indicates the leakage inductance of the transformer. If Np and Ns are the numbers of turns of the primary winding 13 and the secondary winding 15 respectively, then the inductance of the secondary as seen from the primary is given by:

$$L_{0'} = (Np/Ns)^2 L_0$$

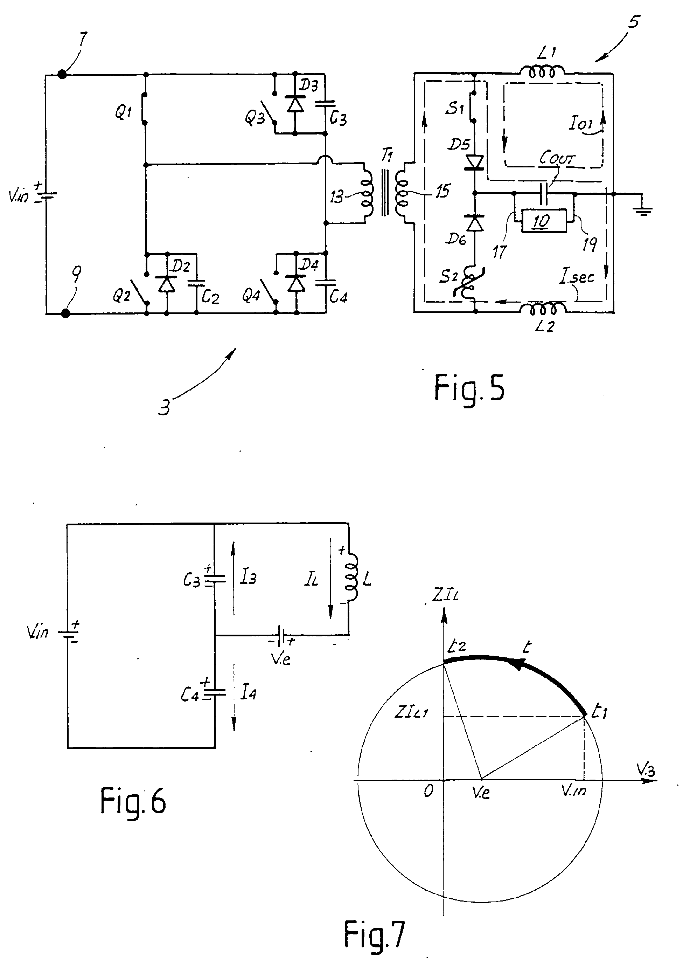

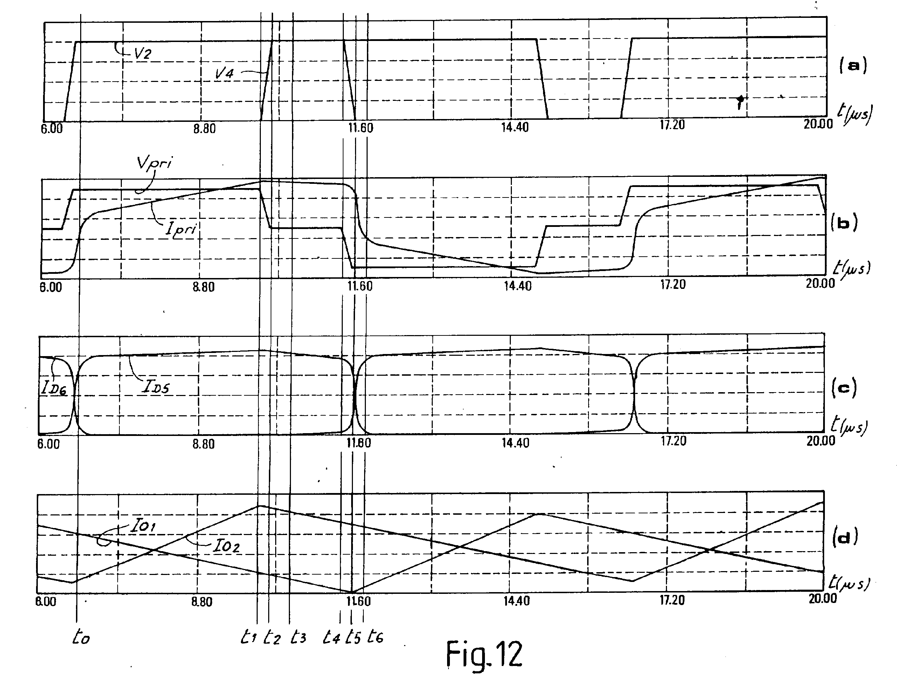

The converter in Fig. 1 passes through four distinct phases during its operation. The following Figs. 4 to 11 show the configurations assumed by the converter in the different phases, while Fig. 12 shows the waveforms of some of the characteristic values as a function of time. With reference to the instants of time $t_0$-$t_6$ indicated in Fig. 12, the phases through which the converter passes are defined thus:

$t_0$-$t_1$: active phase;
$t_1$-$t_2$: phase of transition from the active phase to the passive phase;
$t_2$-$t_3$-$t_4$: active or "freewheeling" phase;
$t_4$-$t_5$-$t_6$: phase of transition from the passive phase to the subsequent active phase.

In the following text, Ts will be used to denote the duration of one period; in other words, Ts = $t_0$ - $t_6$.

Fig. 4 shows the active phase (interval $t_0$-$t_1$) of the circuit in Fig. 1, during which energy is transferred from the switching circuit 3 to the output circuit 5. In this phase, the switches Q1 and Q4 are closed, while the switches Q2 and Q3 are open. A current $I_{pri}$, which passes through the closed switches Q1 and Q4, flows in the primary winding 13.

In the rectifier and output circuit 5, the diode D5 is conducting and the diode D6 is non-conducting; the saturable inductance S1 is saturated, and therefore acts as a closed switch, and is shown as such in Fig. 4. Conversely, the saturable inductance S2 has a high impedance. The current $I_{sec}$ which flows in the secondary winding 15 passes through the diode D5 and charges the output capacitor $C_{out}$ and the output inductance L2, in such a way that the energy is transferred from the

input voltage source $V_{in}$ to the output capacitor $C_{out}$. At the same time, a current $I_{01}$ flows through the output inductance L1, this current circulating in the circuit consisting of the output inductance L1, the saturable inductance S1, the diode D5 and the output capacitor $C_{out}$.

If t denotes time and $t_0$ denotes the instant of the start of the active phase, then:

$$I_{01} = I_{01}(t_0) - [(V_{out} + V_d)(t-t_0)]/L_0$$

$$I_{sec} = I_{02} = I_{02}(t_0) + [(V_{sec} - V_{out} - V_d)(t-t_0)]/L_0$$

$$I_{S1} = I_{D5} = I_{01} + I_{02}$$

$$V_{D6} = V_{sec}$$

$$I_{Q1} = I_{Q2} = I_{pri} = (Ns/Np)I_{02} + I_m$$

where

$$I_m = [V_{in}(t-t_0)/L_m - V'_{out}/(f_s L_m); \; f_s = 1/T_s;$$

$$V'_{out} = (N_p/N_s)(V_{out} + V_d)$$

$$V_{pri} = V_{in} \; (\text{where } L_m//L_{0'} >> L_{lk})$$

$$V_2 = V_3 = V_{in}$$

where:

 $L_0$ is the value of the inductance L1 or of the inductance L2, as defined above
 $I_{01}$ is, as defined above, the current through the output inductance L1
 $I_{02}$ is the current through the output inductance L2
 $V_{sec}$ is the voltage across the terminals of the secondary winding 15
 $V_{pri}$ is the voltage across the terminals of the primary winding 13
 $V_{out}$ is the output voltage between the terminals 17 and 19
 $V_d$ is the voltage drop across the terminals of the diode D5 or D6
 $V_{D6}$ is the voltage across the terminals of the diode D6
 $L_0$ is the inductance of L1 (equal to the inductance of L2)
 $I_{pri}$ and $I_{sec}$ are, as defined, the current in the primary and secondary windings

$I_{S1}$ is the current through the saturable inductance S1
$I_{S2}$ is the current through the saturable inductance S2 (equal to zero in this phase)
$I_{D5}$ is the current through the diode D5;
$I_{Q1}$ and $I_{Q2}$ are the currents through the switches Q1 and Q2
$I_m$ is the magnetizing current of the transformer
$V_{in}$ is, as indicated above, the input voltage between terminals 7 and 9
$V_2$ and $V_3$ are the voltages across the switches Q2 and Q3.

Fig. 12 shows the variations of some of the values listed above in this phase and in the subsequent phases, as functions of the time t.

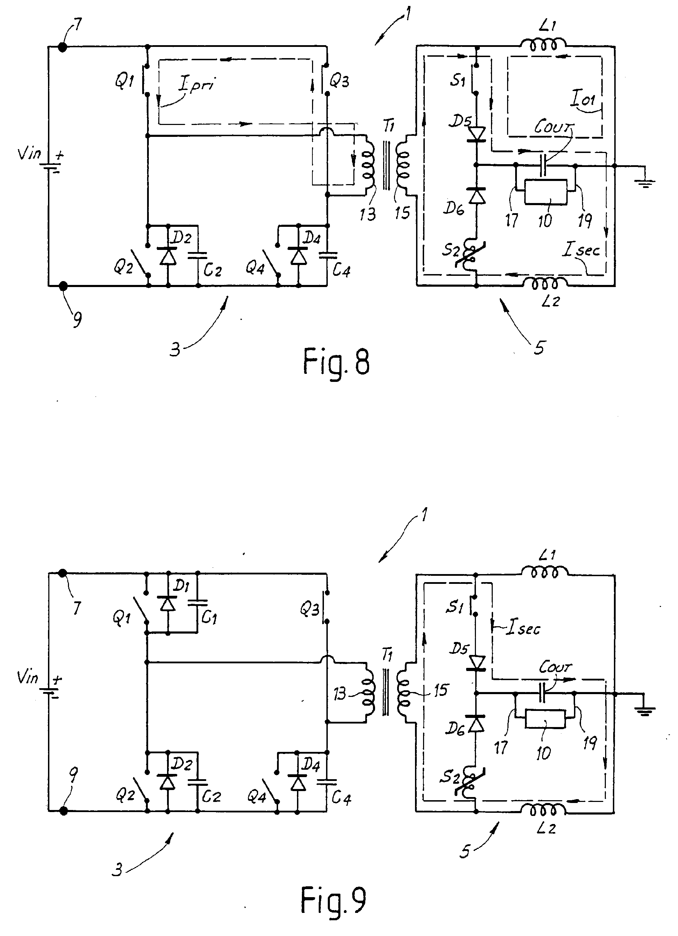

At the instant $t_1$, the switch Q4 is opened and starts the transition from the active phase of Fig. 4 to the passive phase of Fig. 8. The configuration of the circuit in this transition phase is shown in Fig. 5, while Fig. 6 shows the equivalent circuit viewed from the primary, where L and $V_e$ indicate the impedance and the equivalent voltage respectively, which can be determined by the Thevenin theorem and which are

$$V_e = V'_{out} L_m/(L_m + L_{0'})$$

$$L = L_{lk} + (L_m//L_{0'})$$

where

$$V'_{out} = (Np/Ns)(V_{out} + V_d)$$

With reference to the equivalent circuit in Fig. 6, at the instant $t_1$ the following initial conditions are present:

$$I_L(t_1) = I_{LI}$$

$$V_3(t_1) = V_{in}$$

where $V_3$ is again the voltage across the switch Q3, and $I_L$ is the current through the equivalent impedance L.

At the generic instant t, we find that

$$V_3 = (V_{in} - V_e)\cos(\omega t) - ZI_{L1} \sin(\omega t) + V_e$$

$$I_L = I_{L1}\cos(\omega t) + ((V_{in}-V_e)/Z)\sin(\omega t)$$

where

$$\omega^2 = 1/L(C3 + C4) = 1/(2LC)$$

$$Z^2 = L/(C3 + C4) = L/(2C)$$

The vector diagram in Fig. 7 shows the variation of the voltage $V_3$ and $ZI_L$ with time. At the instant $t_2$, the voltage $V_3$, in other words the voltage across the terminals of the switch Q3, becomes zero, and the current through the equivalent inductance L passes through the parasitic diode D3 of the switch Q3. At the instant $t_2$, the passive phase (which will be described with reference to Fig. 8) begins, and the voltage through the switch Q3 is equal to zero. The switching of the switch Q3 at the instant $t_3$ therefore takes place at zero voltage and consequently in conditions of minimum loss.

During the remaining interval $t_3$-$t_4$ of the passive phase, or what is called the "freewheeling" phase, the switches Q1 and Q3 are closed and the switches Q2 and Q4 are open. The device takes on the configuration shown in Fig. 8. In the output circuit 5, the diode D5 is conducting and the saturable inductance S1 is saturated, while the diode D6 is also conducting but the inductance S2 has a high value of impedance.

Characteristically, by contrast with the known circuits, in this "freewheeling" phase the secondary winding 15 is not short-circuited. A current $I_{sec}$ which is different from zero passes through the output inductance L2, and also passes through the secondary winding 15, the saturable inductance S1, the diode D5 and the output capacitor $C_{out}$, so that a current which is the sum of the magnetizing current $I_{mpk}$ and the reflected current corresponding to that flowing in the secondary 15 and in the output inductance L2 flows through the primary winding 13. At the same time, the current $I_{01}$ of the output inductance L1 flows through the saturable inductance S1, the diode D5 and the output capacitor $C_{out}$. The energy accumulated in the output inductances L1 and L2 is transferred to the output capacitor $C_{out}$. The currents and voltages in the individual components take the following values:

$$I_{01} = I_{01}(t_2) - [(V_{out} + V_d)(t-t_2)]/L_0$$

$$I_{sec} = I_{02} = I_{02}(t_2) - [(V_{out} + V_d)(t-t_3)]/L_0$$

$$I_{S1} = I_{D5} = I_{01} + I_{02}$$

$$I_{Q1} = I_{Q3} = I_{pri} = (Ns/Np)I_{-2} + I_{mpk},$$

where

$$I_{mpk} = V'_{out}/f_s L_m$$

$$V_{pri} = 0$$

$$V_2 = V_4 = V_{in}$$

where $V_2$ and $V_4$ are the voltages across the terminals of the switches Q2 and Q4, $I_{Q1}$ and $I_{Q3}$ are the currents through the switches Q1 and Q3, and the other values are as defined above.

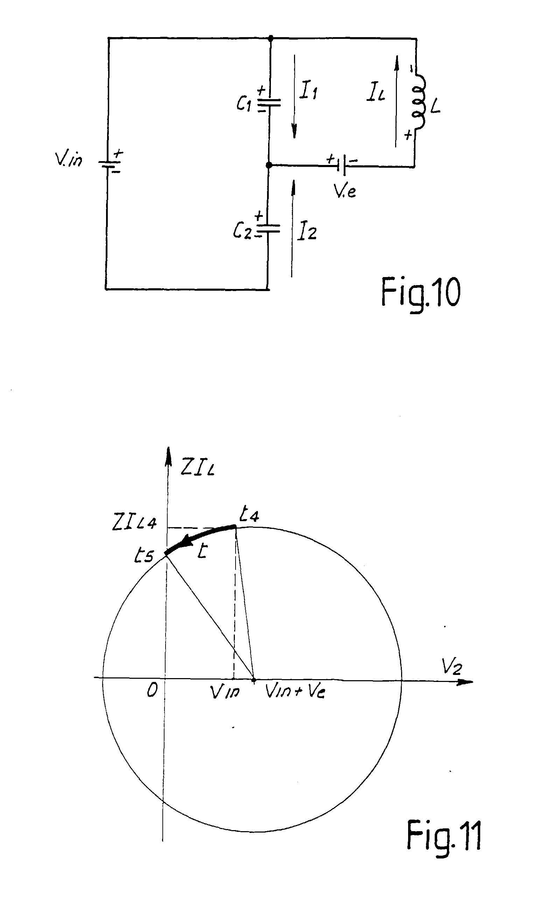

At the instant $t_4$, the passive or "freewheeling" phase ends and the transition from the passive phase to the subsequent active phase starts. This transition phase lasts for a time interval $t_4$-$t_6$. At the instant $t_4$ the switch Q1 opens, while the switch Q3 remains closed. The converter takes on the configuration shown in Fig. 9. Fig. 10 shows the equivalent circuit viewed from the primary, L and $V_e$ being as defined above. With the initial conditions at the instant $t_4$:

$$I_L(t_4) = I_{L4}$$

$$V_2(t_3) = V_{in},$$

we find that

$$V_2 = -V_e\cos(\omega t) - ZI_{L4}\sin((\omega t) + V_{in} + V_e$$

$$I_L = I_{L1}\cos(\omega t) - (V_e/Z)\sin(\omega t)$$

where

$$\omega^2 = 1/(L(C1 + C2) = 1/(2LC)$$

$$Z^2 = L/(C1 + C2) = L/(2LC)$$

if

$$C1 = C2 = C$$

In particular conditions, at the instant $t_5$ (see Fig. 11) the voltage $V_2$ goes to zero and the switch Q2 can be closed to start the subsequent active phase (instant $t_6$). The conditions for which a zero voltage is obtained on the switch Q2 are found from the vector diagram in Fig. 11, which shows the variation of the voltage $V_2$ and $ZI_L$, where $I_L$ is the current in the inductance L of the equivalent circuit in Fig. 10. In particular, if $I_{L4}$ is the current in the inductance L of the equivalent circuit at the instant $t_4$ (opening of the switch Q1), the condition permitting the voltage across the terminals of the switch Q2 to pass through zero is obtained by making the circumference with the center ($V_{in} + V_e$) representing the variation of $V_2$ and $ZI_L$ intersect the ordinate ($V_2 = 0$) at the instant $t_5$. The following condition for the passage of $V_2$ through the zero point is found geometrically:

$$(ZI_{L4})^2 > V_{in}^2 + 2V_{in}V_e$$

If this condition is met, at the instant $t_5$ there is a zero potential drop across the switch Q2, permitting loss-free switching. The current through the equivalent inductance L is transferred to the diode D2. Then, at an instant within the time interval $t_5$-$t_6$, the switch Q2 is closed.

The input voltage $V_{in}$ is thus applied to the terminals of the primary winding 13, and the voltage -(Ns/Np)$V_{in}$ is applied to the terminals of the secondary winding 15 and to the saturable inductance S2.

To enable the switching of Q2 to take place at zero voltage, the switch Q2 must be closed before the saturable inductance S2 becomes saturated. This is because, when the inductance S2 becomes saturated, the secondary winding 15 of the transformer T1 is short-circuited and therefore the input voltage $V_{in}$ is applied to the terminals of the leakage inductance $L_{lk}$. This results in a very rapid variation of the current in the primary, since the leakage inductance $L_{lk}$ is very low.

After the current has been switched from the branch S1, D5 to the branch S2, D6 the second active phase starts (instant $t_6$). S1 takes on a very high value of impedance, D5 is non-conducting, and the current $I_{sec}$, flowing through the secondary 15 and through the output inductance L2, passes through the branch containing the saturable impedance S2 and the diode D6. The situation is a mirror image of that shown in Fig. 4. The phases of active-passive transition, the "freewheeling" phase and the passive-active transition are then repeated in a way which is the mirror image of that described with reference to the preceding figures.

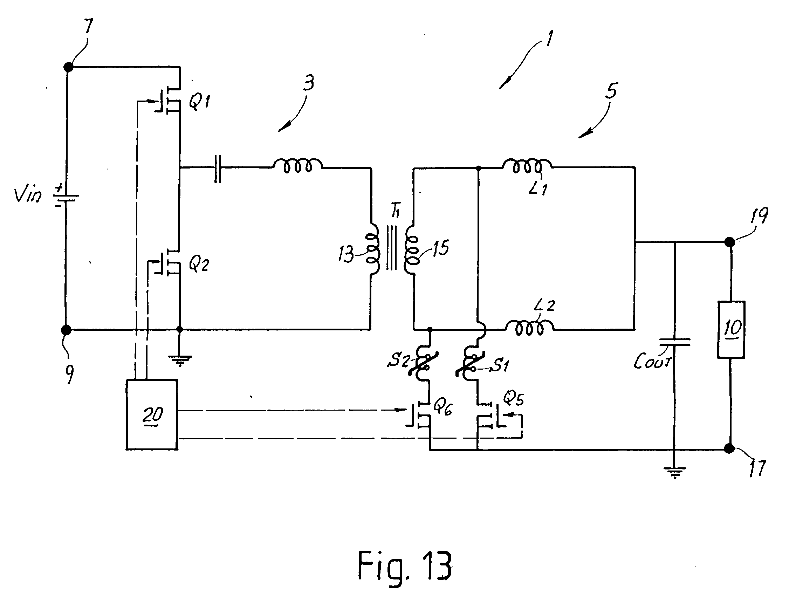

Fig. 13 shows a configuration of a DC/DC converter using the rectifier according to the invention, in which the switching circuit, again indicated by 3, has a half-bridge configuration, comprising switches Q1 and Q2, whose parasitic components are not shown. The rectifier and output circuit 5 is identical to the rectifier and output circuit 5 of the preceding embodiment, but differs from this in that the diodes D5 and D6 are replaced by two controlled switches Q5 and Q6. The number 20 indicates in a general and schematic way an integrated circuit, of a known type, for controlling the switching of the switches Q1-Q6. S1 and S2 again indicate two saturable inductances and L1 and L2 indicate the output impedances, while $C_{out}$ again represents the output capacitor.

The advantages obtained in the circuit in Figs. 1 to 11 are also obtainable in the circuit in Fig. 13, in respect of which similar considerations are valid.

In Fig. 13, the controlled switches Q5 and Q6 can be replaced by diodes similar to the diodes D5 and D6, just as in the circuit in Figs. 1 to 11 the diodes D5 and D6 can be replaced by controlled switches Q5 and Q6.

## Claims

1. A rectifier comprising:

   - a transformer (T1) with a primary winding (13) to whose ends is applied a voltage which is cyclically variable over time, and a secondary winding (15), said secondary winding comprising two ends;
   - a first and a second electronic rectifying component (D5, D6; Q5, Q6) capable of assuming a conducting condition and a non-conducting condition and having corresponding first and second electrodes, the first electrode of each of said rectifying components being connected to a first output terminal (17) of the rectifier;
   - a first and a second reactive component (L1, L2) interposed between the corresponding second electrode of each of said rectifying components (D5, D6; Q5, Q6) and a second output terminal (19) of said rectifier, said second electrodes of said two rectifying components being additionally connected to the two ends of said secondary winding (15);

   characterized in that a first and a second delay element (S1, S2), which maintain a flow of current through said secondary winding (15) during a freewheeling passive phase of the rectifier, are connected in series with each of said first and second rectifying components (D5, D6; Q5, Q6) respectively.

2. Rectifier according to claim 1, characterized in that each of said first and said second delay elements comprises an inductance.

3. Rectifier according to claim 1 or 2, characterized in that each of said first and said second delay elements comprises a saturable inductance.

4. Rectifier according to claim 1, 2 or 3, characterized in that said rectifying components consist of a first and a second diode (D5, D6).

5. Rectifier according to claim 1, 2 or 3, characterized in that said two rectifying components consist of controlled electronic switches (Q5, Q6).

**6.** Rectifier according to one or more of the preceding claims, characterized in that the primary winding of said transformer (T1) is inserted in a switching circuit of a DC/DC converter.

**7.** Rectifier according to claim 6, characterized in that said switching circuit has a full-bridge configuration (Q1, Q2, Q3, Q4).

**8.** Rectifier according to claim 6, characterized in that said switching circuit has a half-bridge configuration (Q1, Q2).

**9.** Rectifier according to one or more of the preceding claims, characterized in that it is inserted in a PWM converter of the bridge type with resonant transition.

**10.** A DC/DC power converter comprising:

- a switching circuit (3) comprising controlled switches (Q1-Q4; Q1, Q2);
- a transformer (T1) with a primary winding (13) inserted in said switching circuit (3), and a secondary winding (15) inserted in a rectification circuit (5), said secondary winding comprising two ends;
- in said rectification circuit, a first and a second electronic rectifying component (D5, D6; Q5, Q6) capable of assuming a conducting condition and a non-conducting condition and having corresponding first and second electrodes, the first electrode of each of said rectifying components being connected to a first output terminal (17) of the converter;
- a first and a second reactive component (L1, L2) interposed between the corresponding second electrode of each of said rectifying components (D5, D6; Q5, Q6) and a second output terminal (19) of said converter; said second electrodes of said two rectifying components being additionally connected to the two ends of said secondary winding (15);

characterized in that a first and a second delay element (S1, S2), which maintain a flow of current through said secondary winding (15) and consequently through said primary winding during a free-wheeling passive phase of the converter, are connected in series with each of said first and second rectifying components (D5, D6; Q5, Q6) respectively.

Fig. 1

Fig.2

Fig. 3

Fig. 4

Fig. 5

Fig. 6

Fig. 7

Fig. 8

Fig. 9

Fig.10

Fig.11

Fig.12

Fig. 13

## EUROPEAN SEARCH REPORT

European Patent Office

**Application Number**

EP 99 83 0448

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | US 4 899 271 A (OLE S. SEIERSEN) 6 February 1990 (1990-02-06) * figures 3-5 * | 1-10 | H02M3/337 H02M3/28 |
| D,Y | US 5 132 889 A (LEONARD J. HITCHCOCK ET AL.) 21 July 1992 (1992-07-21) * abstract * * figures 1,5 * * column 2, line 54 - column 3, line 43 * | 1-10 | |
| A | US 5 684 683 A (DEEPAKRAJ M. DIVAN ET AL.) 4 November 1997 (1997-11-04) * abstract * * figures 3,4 * * column 10, line 19 - line 27 * | 1-10 | |
| A | EP 0 474 471 A (ITT INDUSTRIES) 11 March 1992 (1992-03-11) * abstract * * column 12, line 21 - column 13, line 40 * * figures 1,6,7,11 * | 1-10 | |
| A | EP 0 610 158 A (MELCHER AG) 10 August 1994 (1994-08-10) * abstract * * column 9, line 40 - column 11, line 8 * * figures 1,3 * | 1 | TECHNICAL FIELDS SEARCHED (Int.Cl.7) H02M |
| A | US 5 325 283 A (RICHARD W. FARRINGTON ET AL.) 28 June 1994 (1994-06-28) * abstract * * figure 3 * * column 2, line 53 - column 3, line 16 * | 1 | |

The present search report has been drawn up for all claims

| Place of search | Date of completion of the search | Examiner |
|---|---|---|
| THE HAGUE | 21 December 1999 | Lund, M |

**ANNEX TO THE EUROPEAN SEARCH REPORT
ON EUROPEAN PATENT APPLICATION NO.**
EP 99 83 0448

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-1999

| Patent document cited in search report | | Publication date | Patent family member(s) | | Publication date |
|---|---|---|---|---|---|
| US 4899271 | A | 06-02-1990 | DK | 382687 A | 14-04-1989 |
| US 5132889 | A | 21-07-1992 | JP | 5111256 A | 30-04-1993 |
| | | | JP | 7028531 B | 29-03-1995 |
| US 5684683 | A | 04-11-1997 | NONE | | |
| EP 474471 | A | 11-03-1992 | US | 5126931 A | 30-06-1992 |
| | | | DE | 69119848 D | 04-07-1996 |
| | | | DE | 69119848 T | 16-01-1997 |
| | | | US | 5231563 A | 27-07-1993 |
| EP 610158 | A | 10-08-1994 | US | 5434768 A | 18-07-1995 |
| | | | DE | 69400222 D | 11-07-1996 |
| | | | DE | 69400222 T | 28-11-1996 |
| US 5325283 | A | 28-06-1994 | NONE | | |

EPO FORM P0459

For more details about this annex : see Official Journal of the European Patent Office, No. 12/82